# EUROPEAN PATENT SPECIFICATION

(11) **EP 1 712 447 B1**
(45) Date of publication and mention of the grant of the patent: **18.03.2009**
(21) Application number: 06112434.3
(22) Date of filing: 10.04.2006
(51) Int. Cl.: B62D 5/04

(54) **Control apparatus of electric power steering apparatus**
Steuergerät einer elektrischen Servolenkung
Appareil de commande d'une direction assistée

(30) Priority: 13.04.2005 JP 2005115338
(43) Date of publication of application: 18.10.2006
(73) Proprietor: NSK Ltd., Tokyo 141-8560 (JP)
(72) Inventor: Kawada, Hideaki, Maebashi-Shi Gunma 371-8527 (JP); Shingo, Masanori, Maebashi-Shi Gunma 371-8527 (JP)
(74) Representative: Hooiveld, Arjen Jan Winfried

(56) References cited:
- EP-A2- 0 536 590
- EP-A2- 1 437 288
- US-A1- 2002 084 137

## Description

### BACKGROUND OF THE INVENTION

### 1. Field of the Invention

The present invention relates to a control apparatus of an electric power steering apparatus (EPS) for applying a steering assist force obtained by a motor of a steering system of an automobile or a vehicle.

### 2. Description of the Related Art

An electric power steering apparatus for assisting a steering apparatus of an automobile of a vehicle by rotation force of a motor applies a driving force of the motor to a steering shaft or a rack shaft by a transmitting mechanism such as gears and a belt through a speed reducer. Since such a conventional electric power steering apparatus precisely generates assist torque (steering assist force), a feedback control of a motor current is performed. In the feedback control, the motor applied voltage is adjusted such that a difference between a current command value and a motor current detection value becomes small. The motor applied voltage is generally adjusted by adjusting a duty ratio of PWM (pulse width modulation) control.

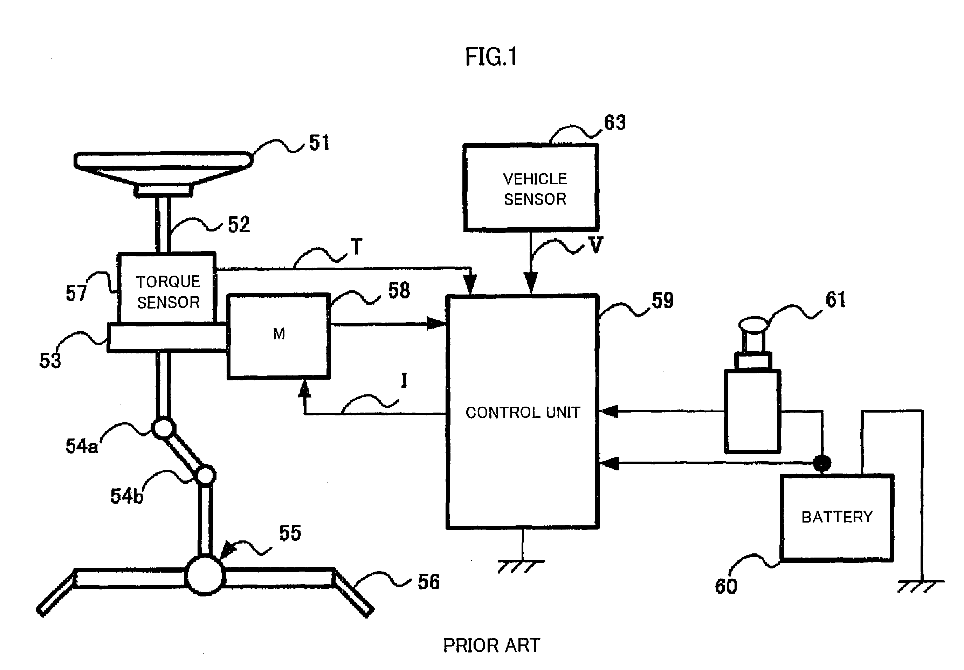

Here, a general structure of the electric power steering apparatus will be explained with reference to FIG. 1. A column shaft 52 of a steering wheel 51 is connected to a tie rod 56 of wheels to be steered through speed reduction gears 53, universal joints 54a and 54b and a pinion rack mechanism 55. The column shaft 52 is provided with a torque sensor 57 for detecting a steering torque of the steering wheel 51. A motor 58 for assisting a steering force of the steering wheel 51 is connected to the column shaft 52 through the speed reduction gears 53. Electric power is supplied from a battery 60 to a control unit 59 which controls the electric power steering apparatus, and an ignition signal is inputted to the control unit 59 from an ignition key 61. The control unit 59 calculates a steering assist command value I of assist command based on a steering torque T detected by the torque sensor 57 and a vehicle speed V detected by a vehicle speed sensor 63, and current to be supplied to the motor 58 is controlled by the calculated steering assist command value I.

As shown in Japanese Patent No.3508702 B2, the electric power steering apparatus of the above kind includes an analog to digital converting means (refer to "ADC", hereinafter) for converting magnitude of the motor current into a digital amount, and a current control means for controlling the motor current in accordance with the digital amount of the motor current converted by the ADC. The electric power steering apparatus detects a steering state, switches converting means used for controlling the motor current based on the steering state, and can selects the conversion digital amounts.

According to the above conventional electric power steering apparatus, an output of a current detecting amplifier for detecting a current value flowing through the electric motor is inputted to a microcomputer as it is, and its signal is used for controlling the motor current as a current detection signal.

As the output of the motor is increased, a measuring range of the current detection is increased. However, resolution of an ADC is relatively roughened. This is because that although ADSc having high resolution are available in recent market, but if cost up or using track record is taken into consideration, conventional products are still used because it is difficult to immediately change the ADC and meet a high resolution requirement.

However, concerning the steering performance of the electric power steering apparatus, steering feeling in the small current region has become increasingly valued, and there is a problem that the steering feeling is deteriorated if the conventional resolution remains as it is.

A control apparatus of an electric power steering apparatus as described in the preamble of claim 1 is disclosed in European patent publication no. 1 437 288 (Koyo Seiko Co.).

### SUMMARY OF THE INVENTION

Hence, it is an object of the present invention to make the steering characteristics in a small current region excellent by correcting voltage in the small current region.

The above object of the present invention is achieved by providing a control apparatus of an electric power steering apparatus for feedback controlling operation of a motor by a microcomputer (including a micro controller unit (MCU)) based on a current value of the motor detected by a current detector, wherein an arbitrary function generator of a current detecting characteristics is provided between a current detecting amplifier of the current detector and the microcomputer, and a motor current detection characteristics is corrected, characterized in that said arbitrary function generator (35) outputs a logarithmic signal.

In a preferred embodiment of a control apparatus in accordance with the invention, an output of said arbitrary function generator (35) is varied in accordance with said motor current.

In another preferred embodiment of a control apparatus according to the invention, both a signal whose motor current detecting characteristic is corrected and an output signal of said current detecting amplifier (32) whose motor current detecting characteristic is not corrected are inputted to said microcomputer. Particularly, said arbitrary function generator outputs a logarithmic signal. More in particular, said corrected current detecting signal is used for controlling a current of a small current region, and said non-corrected current detecting signal is used for controlling a current from an intermediate current region to a large current region.

### BRIEF DESCRIPTION OF THE DRAWINGS

In the accompanying drawings:
FIG. 1 is a diagram showing an example of a structure of a general electric power steering apparatus;
FIG. 2 is a block diagram showing an outline structure of a control apparatus of an electric power steering apparatus according to the present invention;
FIG. 3 is a diagram for schematically explaining a motor current detecting characteristic;
FIG. 4 is a diagram showing a relation of a detection voltage with respect to a motor current detected by a current detecting amplifier;
FIG. 5 is a diagram showing a current detecting characteristic for explaining a relation of the detection voltage with respect to the motor current with linear indication when the detection data is corrected by the arbitrary function generator;
FIG. 6 is a diagram of a current detecting characteristic for explaining a relation of detection voltage with respect to the motor current with logarithm indication when detection data is corrected by an arbitrary function generator;
FIG. 7 is a diagram showing that a current detection characteristic of the arbitrary function generator is made variable, and an output signal of the current detecting amplifier is sent to the microcomputer; and
FIG. 8 is a diagram showing a relation of detection voltage with respect to the motor current in a state where the current detecting characteristic of the arbitrary function generator are made variable.

### DETAILED DESCRIPTION OF THE PREFERRED EMBODIMENTS

An embodiment of the present invention will be explained with reference to the drawings.

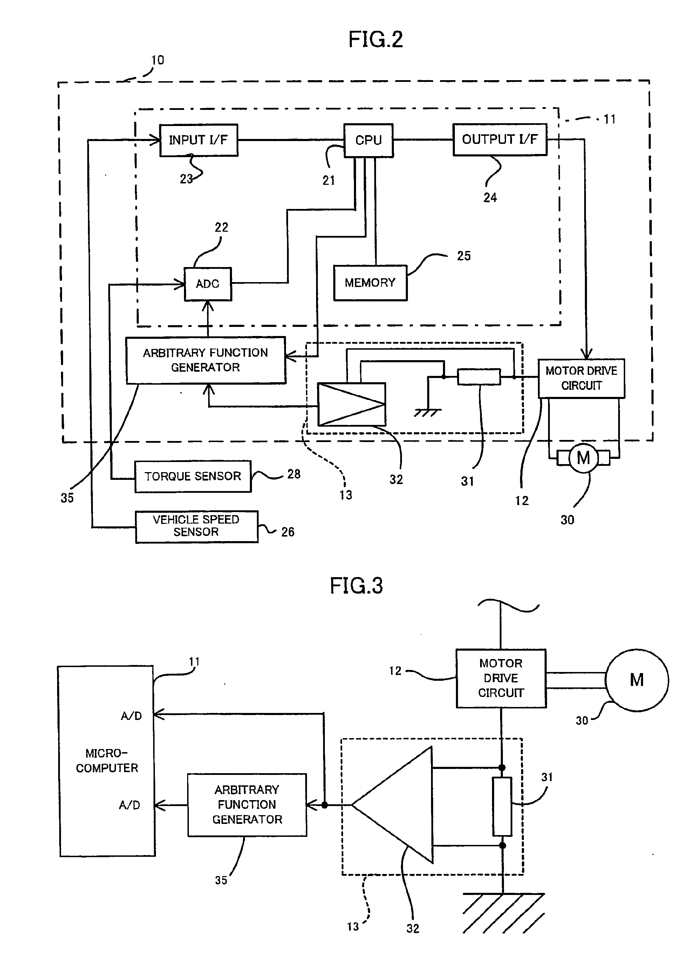

FIG. 2 is a block diagram showing an outline structure when a control apparatus of an electric power steering apparatus according to the present invention is applied to a vehicle. A control section 10 includes a microcomputer (or MCU) 11, a motor drive circuit 12 comprising a plurality of switching elements, and a current detecting circuit 13 for detecting a current flowing through a motor 30.

The microcomputer 11 includes a CPU 21, an ADC 22 for converting an analog signal into a digital signal, an input interface 23, an output interface 24 and a memory 25 comprising a ROM and a RAM. The CPU 21 controls the motor drive circuit 12 through the output interface 24 based on an input signal from the input interface 23.

As shown in FIG. 3, the current detecting circuit 13 is connected to the motor drive circuit 12. The current detecting circuit 13 includes a register (shunt register) 31, and a current detecting amplifier 32 which is connected to both ends of the register 31 and which detects motor current. The current detecting amplifier 32 detects voltages of both ends of the shunt register 31, amplifies the voltages with predetermined amplification factor, and inputs the same to the microcomputer 11.

An arbitrary function generator 35 which generates a current detecting characteristic as an arbitrary function is provided between the microcomputer 11 and an output side of the current detecting amplifier 32. An output signal of the current detecting amplifier 32 is inputted to the microcomputer 11, and an arbitrary signal from the arbitrary function generator 35 is also inputted to the microcomputer. The arbitrary function generator 35 optimally corrects the motor current detecting characteristic.

The arbitrary function generator 35 comprises a logarithmic amplifier and so on. The arbitrary function generator 35 has a logarithmic characteristic as the current detecting characteristic and can correct voltage from a small current region to a large current region of the motor current. That is, the logarithmic amplifier amplifies logarithm in such a manner that a small signal is amplified largely and a large signal is amplified small. Therefore, a current detecting signal obtained by the current detecting amplifier 32 can be corrected more finely than in a region from an intermediate current to a logarithmic characteristic in a small current region of the motor current.

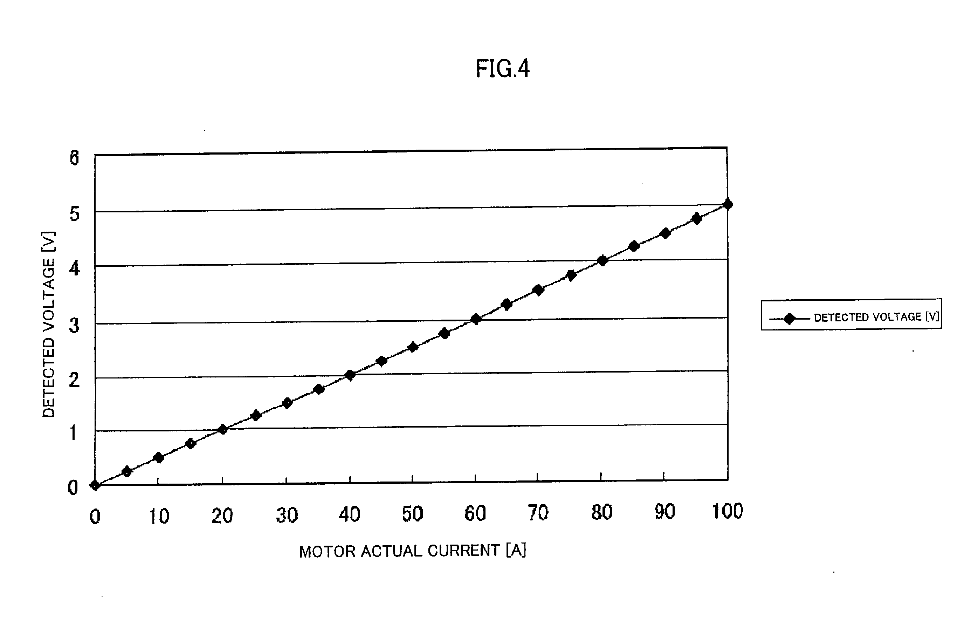

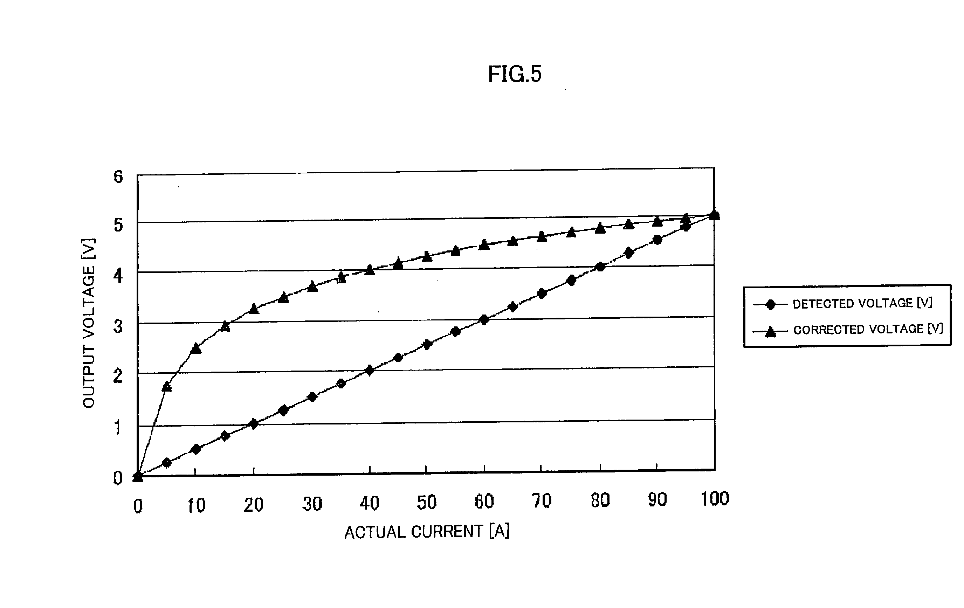

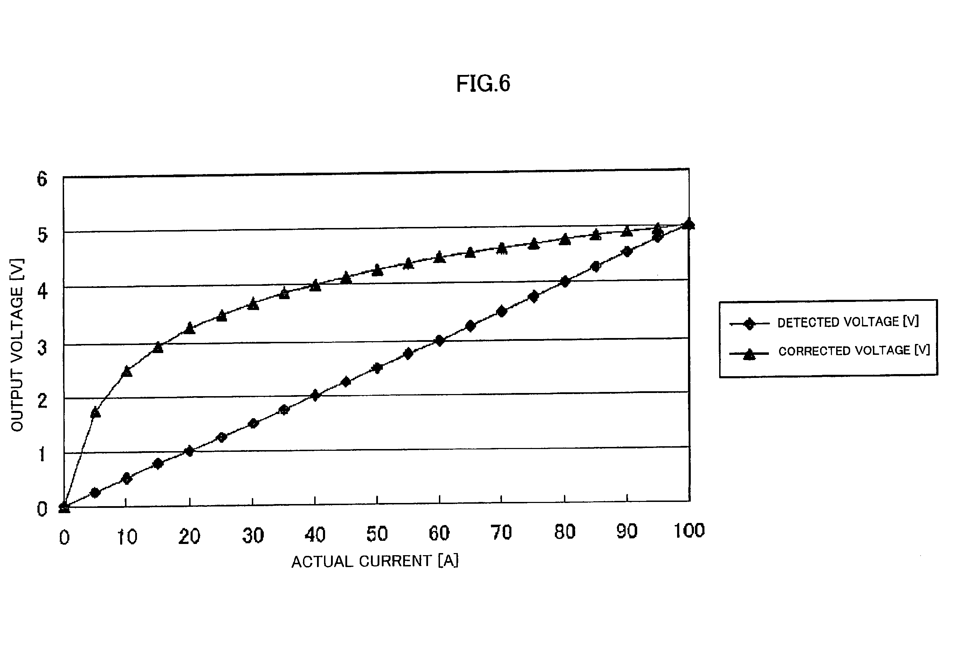

For example, FIG. 4 shows a motor current detecting characteristic of the current detecting circuit 13, and shows a relation of a detected voltage with respect to the motor current. In this case, it can be found that if the output of the current detecting circuit 13 is corrected by the arbitrary function generator 35, since the arbitrary function generator 35 such as the logarithmic amplifier has a logarithmic characteristic, the output is largely amplified in the small current region and the output is amplified only little in the large current region as shown in FIG. 5 (linear indication) and FIG. 6 (semi-logarithm indication).

With this, in the motor control of the electric power steering apparatus, if the current detecting characteristic is switched to the logarithmic characteristic, it is possible to precisely control the operation of the motor 30 in a small current region such as near the neutral point of a steering wheel where the motor current becomes small. That is, if the output from the current detecting amplifier 32 is sent to the microcomputer 11 in such a manner that the current detecting characteristic is switched in accordance with the magnitude of the motor current by the arbitrary function generator 35 in a small current region and that the arbitrary function generator 35 is bypassed in a region from the intermediate current region to the large current region, it is possible to precisely control the operation of the motor 30 in the small current region where the motor current becomes small, and an excellent steering feeling can be obtained in the small current region.

Therefore, the arbitrary function generator 35 is provided between the current detecting amplifier 32 and the microcomputer 11, the current detecting characteristic of the arbitrary function generator 35 has a logarithmic characteristic. Accordingly, it is possible to finely correct a current detecting signal of the current detecting amplifier 32 in the small current region where the motor current is small. That is, a control can be performed such that in the region from the intermediate current region to the large current region of the motor current, the output from the current detecting amplifier 32 is inputted to the microcomputer 11 as it is, and the current detecting characteristic is switched to the logarithmic characteristic in the small current region where the motor current is small such as a region in the vicinity of the neutral point of the steering wheel. Thus, the steering feeling becomes excellent in a region near the neutral point of the steering wheel and when the motor current is small and the motor current must be controlled finely.

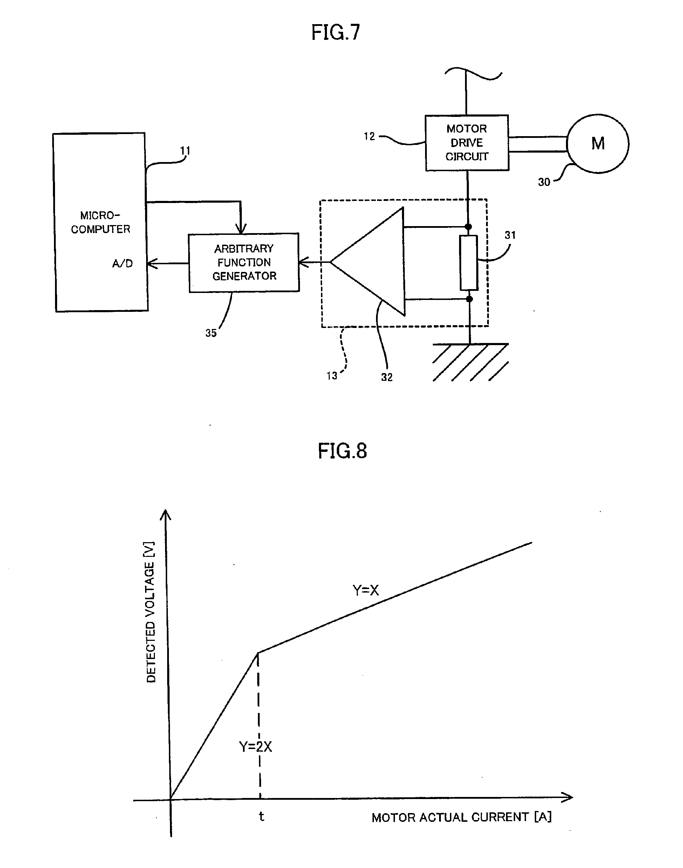

FIG. 7 shows amodification in which the current detecting characteristic of the arbitrary function generator 35 is made variable in accordance with magnitude of the motor current. In this modification, the arbitrary function generator 35 is provided between the current detecting amplifier 32 and the microcomputer 11, and both a signal whose motor current detecting characteristic is corrected and an output signal of the current detecting amplifier 32 whose motor current detecting characteristic is not corrected are inputted to the microcomputer 11. As shown in FIG. 8, for example, the current detecting characteristic of the arbitrary function generator 35 can be made variable, and the current detecting characteristic in the small current region can be set different from those in other regions. In this example, a relation of a detected voltage with respect to the motor current is set such that the small current region (Y = 2X) is different from a region from the intermediate current region to the large current region (Y = X) with respect to the point "t". Thus, the bypass path of the arbitrary function generator 35 can be omitted, and the same effect as that of the above embodiment can be obtained.

The characteristic of the arbitrary function generator 35 can arbitrarily be varied based on commands from the CPU 21, the characteristic can be selected from small, large various kinds of current regions in accordance with a using purpose, and the steering feeling becomes more excellent.

According to the control apparatus of the electric power steering apparatus of the present invention as described above, the arbitrary function generator such as a logarithmic amplifier is provided between the current detecting amplifier and the microcomputer, and the output signal from the current detecting amplifier is corrected as a logarithmic characteristic. With this, if the motor current detecting characteristic is switched to the logarithmic characteristic, an output voltage of the current detecting amplifier can finely corrected. Especially, in the vicinity of a neutral point of a steering wheel, such as in a small current region where a vehicle is in a driving state where the motor current must be controlled finely, an excellent steering feeling can be obtained. If the current detecting characteristic is made variable in accordance with the magnitude of the motor current with respect to the arbitrary function generator, a bypass path of the arbitrary function generator can be omitted.

## Claims

1. A control apparatus of an electric power steering apparatus for feedback controlling operation of a motor (30) by a microcomputer (11) based on a motor current detected by a current detector (13), wherein an arbitrary function generator (35) of a current detecting characteristic is provided between a current detecting amplifier (32) of said current detector (13) and said microcomputer (11), and a motor current detecting characteristic is corrected, **characterized in that** said arbitrary function generator (35) outputs a logarithmic signal.

2. A control apparatus of an electric power steering apparatus according to claim 1, wherein an output of said arbitrary function generator (35) is varied in accordance with said motor current.

3. A control apparatus of an electric power steering apparatus according to claim 1 or 2, wherein both a signal whose motor current detecting characteristic is corrected and an output signal of said current detecting amplifier (32) whose motor current detecting characteristic is not corrected are inputted to said microcomputer.

4. A control apparatus of the electric power steering apparatus according to claim 3, wherein said corrected current detecting signal is used for controlling a current of a small current region, and said non-corrected current detecting signal is used for controlling a current from an intermediate current region to a large current region.

5. A control apparatus of an electric power steering apparatus according to claim 3, wherein an output of said arbitrary function generator (35) is varied in accordance with said motor current.

## Patentansprüche

1. Steuervorrichtung einer elektrischen Servolenkvorrichtung zur Rückführungsregelung eines Motors (30) durch einen Mikrocomputer (11) auf der Grundlage eines von einem Stromdetekor (13) detektieren Motorstroms, wobei ein Generator (35) einer anwenderdefmierten Funktion einer Stromdetektionscharakteristik zwischen einem Stromdetektionsverstärker (32) des Stromdetektors (13) und dem Mikroprozessor (11) vorgesehen ist, und eine Motorstromdetektionscharakteristik korrigiert wird, **dadurch gekennzeichnet, dass** der Generator (35) einer anwenderdefmierten Funktion ein logarithmisches Signal ausgibt.

2. Steuervorrichtung einer elektrischen Servolenkvorrichtung nach Anspruch 1, **dadurch gekennzeichnet, dass** eine Ausgabe des Generator (35) einer anwenderdefmierten Funktion gemäß dem Motorstrom variiert wird.

3. Steuervorrichtung einer elektrischen Servolenkvorrichtung nach Anspruch 1 oder 2, **dadurch gekennzeichnet, dass** sowohl ein Signal, dessen Motorstromdetektionscharakteristik korrigiert ist, als auch ein Ausgabesignal des Stromdetektionsverstärkers (32), dessen Motorstromdetektionscharakteristik nicht korrigiert ist, in den Mikroprozessor geben werden.

4. Steuervorrichtung einer elektrischen Servolenkvorrichtung nach Anspruch 3, **dadurch gekennzeichnet, dass** das korrigierte Stromdetektionssignal zur Steuerung eines Stroms eines Gebiets mit geringem Strom verwendet wird und das nicht korrigierte Stromdetektionssignal zur Steuerung eines Stroms aus einem Gebiet mit mittlerem Strom bis zu einem Gebiet mit hohem Strom verwendet wird.

5. Steuervorrichtung einer elektrischen Servolenkvorrichtung nach Anspruch 3, **dadurch gekennzeichnet, dass** eine Ausgabe des Generators (35) einer anwenderdefinierten Funktion gemäß dem Motorstrom variiert wird.

## Revendications

1. Appareil de commande d'un système de direction à assistance électrique destiné à une opération de rétrocontrôle d'un moteur (30) par un micro-ordinateur (11) en fonction d'un courant de moteur détecté par un détecteur (13) de courant, dans lequel un générateur (35) de fonctions aléatoires d'une caractéristique de détection de courant est prévu entre un amplificateur (32) de détection de courant dudit détecteur (13) de courant et ledit micro-ordinateur (11) et dans lequel une caractéristique de détection de courant de moteur est corrigée, **caractérisé en ce que** ledit générateur (35) de fonctions aléatoires émet un signal logarithmique.

2. Appareil de commande d'un système de direction à assistance électrique selon la revendication 1, dans lequel un signal de sortie dudit générateur (35) de fonctions aléatoires est modifié selon le courant du moteur.

3. Appareil de commande d'un système de direction à assistance électrique selon la revendication 1 ou 2, dans lequel un signal dont la caractéristique de détection de courant de moteur est corrigée et un signal de sortie dudit amplificateur (32) de détection de courant dont la caractéristique de détection de courant de moteur n'est pas corrigée sont émis en entrée dudit micro-ordinateur.

4. Appareil de commande du système de direction à assistance électrique selon la revendication 3, dans lequel ledit signal de détection de courant corrigé est utilisé pour commander un courant d'une région de courant faible, et dans lequel ledit signal de détection de courant non corrigé est utilisé pour commander un courant à partir d'une région de courant intermédiaire vers une région de courant élevé.

5. Appareil de commande d'un système de direction à assistance électrique selon la revendication 3, dans lequel un signal de sortie dudit générateur (35) de fonctions aléatoires est modifié selon ledit courant de moteur.
